# EUROPÄISCHE PATENTSCHRIFT

(11) **EP 2 087 161 B1**
(45) Veröffentlichungstag und Bekanntmachung des Hinweises auf die Patenterteilung: **28.07.2010**
(21) Anmeldenummer: 07821689.2
(22) Anmeldetag: 23.10.2007
(51) Int. Cl.: D06F 58/00

(54) **VERFAHREN ZUM BETREIBEN EINES HAUSGERÄTS ZUR PFLEGE VON WÄSCHESTÜCKEN**
METHOD FOR OPERATING A HOUSEHOLD APPLIANCE FOR LAUNDRY CARE
PROCÉDÉ POUR FAIRE FONCTIONNER UN APPAREIL ÉLECTROMÉNAGER DESTINÉ À L'ENTRETIEN DU LINGE

(30) Priorität: 31.10.2006 DE 102006051505
(43) Veröffentlichungstag der Anmeldung: 12.08.2009
(73) Patentinhaber: BSH Bosch und Siemens Hausgeräte GmbH, 81739 München (DE)
(72) Erfinder: GRUNERT, Klaus, 13465 Berlin (DE); STOLZE, Andreas, 14612 Falkensee (DE)
(86) Internationale Anmeldenummer: PCT/EP2007/061325
(87) Internationale Veröffentlichungsnummer: WO 2008/052906

(56) Entgegenhaltungen:
- EP-A- 0 328 250
- EP-A- 0 424 781
- EP-A- 0 435 015
- EP-A- 1 342 828
- DE-A1- 4 216 106
- DE-B1- 2 215 318
- DE-U- 6 926 182
- GB-A- 2 051 330

## Beschreibung

Die Erfindung betrifft ein Verfahren zum Betreiben eines Hausgeräts zur Pflege von Wäschestücken, bei welchem zum Trocknen der Wäschestücke eine Wärmepumpe des Hausgeräts aktiviert und elektrisch mit Energie versorgt wird. In einem weiteren Aspekt der Erfindung wird bei einem derartigen Verfahren ein zur Wärmepumpe strömender Prozessluftstrom während eines Trocknungsprozesses erzeugt.

Ein Verfahren mit allen Merkmalen des Oberbegriffs des unabhängigen Anspruchs ist beispielsweise aus EP 1 342 828 A2 bekannt.

Ein Wäschetrockner, welcher eine Wärmepumpe aufweist, ist beispielsweise aus der DE 69 261 82 U1 bekannt. Die Wärmepumpe kann eine so genannte Peltier-Wärmepumpe sein, also eine Wärmepumpe, die mit Halbleiterbauelementen (so genannten Peltier-Elementen) arbeitet, welche den thermoelektrischen Effekt zur Herstellung eines Wärmeflusses oder einer Temperaturdifferenz nutzen.

Abhängig von dem zur Verfügung stehenden Bauraum in einem Wäschetrockner, dem realisierbaren Luftvolumenstrom und der elektrischen Anschlussleistung der Wärmepumpe, insbesondere Peltier-Wärmepumpe, sind die realisierbaren Trocknungszeiten in einem solchen Wäschetrockner üblicherweise recht lang. Eine Verkürzung der Trocknungszeit ist durch eine Verbesserung des Pumpfaktors der Wärmepumpe und eine Verkürzung der Aufheizphase des Wäschetrockners möglich. Dieses Verbesserungskriterium bezieht sich auf eine hohe Prozesstemperatur bei kleiner Anschlussleistung. Eine größere elektrische Anschlussleistung der Wärmepumpe führt zwar zu einer etwas verkürzten Trocknungszeit, aber das Energieziel ist durch den schlechteren Wirkungsgrad beim Betrieb dieser Wärmepumpe nicht mehr erreichbar.

Es ist ein Wäschetrockner mit Peltier-Wärmepumpe bekannt, welcher aufgrund einer relativ geringen Anschlussleistung der Peltier-Elemente dieser Wärmepumpe von etwa 600 W bis etwa 1200 W und einer Pumpleistung von etwa 350 W bis 700 W eine relativ lange Aufheizphase und Trocknungsphase hat.

Daher ist es Aufgabe der vorliegenden Erfindung, ein Verfahren zu schaffen, mit dem ein Hausgerät zur Pflege von Wäschestücken so betrieben werden kann, dass die Trocknungszeit verkürzt werden kann.

Diese Aufgabe wird durch ein Verfahren, welches die Merkmale nach Patentanspruch 1 aufweist, und ein Verfahren, welches die Merkmale nach Patentanspruch 8 aufweist, gelöst.

Die Erfindung betrifft ein Verfahren zum Betreiben eines Hausgeräts zur Pflege von Wäschestücken, bei welchem zum Trocknen der Wäschestücke eine Wärmepumpe des Hausgeräts aktiviert und elektrisch mit Energie versorgt wird, und ein zur Wärmepumpe strömender Prozessluftstrom während eines Trocknungsprozesses erzeugt wird. Dieser Prozessluftstrom wird während einer ersten Prozessphase des Trocknungsprozesses getaktet erzeugt. Unter einer getakteten Erzeugung des Prozessluftstroms wird die Variation der Strömungsstärke des Prozessluftstroms verstanden. Insbesondere wird unter der getakteten Erzeugung quasi ein Ein- und Ausschalten des Prozessluftstroms und somit ein einerseits Vorhandensein eines Prozessluftstroms und andererseits das Nichtvorhandensein eines Prozessluftstroms verstanden.

Durch eine derartige Vorgehensweise können die Trocknungszeit verkürzt und der Energieverbrauch des Hausgeräts reduziert werden. Hierbei wird zu Beginn der Aufheizphase die Taktung so durchgeführt, dass für eine vorgebbare erste Zeitdauer und/oder bis zum Erreichen eines vorgebbaren ersten Temperatur-Schwellwerts der Wärmepumpe kein Prozessluftstrom erzeugt wird. Nach dem Start des Trocknungsprozesses wird somit die Wärmepumpe nicht von einem Prozessluftstrom beaufschlagt. Dadurch wird das Temperaturniveau an den Elementen der Wärmepumpe relativ schnell vergrößert, wodurch eine Verbesserung der Pumpleistung und somit eine Verbesserung des Wirkungsgrades erzielt werden kann. Diese Ausgestaltung ist besonders wichtig für den Fall, dass die Wärmepumpe eine Peltier-Wärmepumpe ist.

Bevorzugt wird die getaktete Erzeugung des Prozessluftstroms während einer Aufheizphase zu Beginn des Trocknungsprozesses durchgeführt.

Nach Ablauf der vorgebbaren ersten Zeitdauer und/oder nach dem Erreichen des ersten Temperatur-Schwellwerts wird bevorzugt ein Prozessluftstrom für eine vorgebbare zweite Zeitdauer und/oder bis zum Erreichen eines vorgebbaren zweiten Temperatur-Schwellwerts erzeugt. Der zweite Temperatur-Schwellwert ist bevorzugt niedriger als der erste Temperatur-Schwellwert. Somit wird nach Erreichen des ersten Temperatur-Schwellwerts an der Wärmepumpe ein Prozessluftstrom erzeugt bzw. zugeschaltet, damit die zulässigen Temperaturen an der Wärmepumpe nicht überschritten werden und keine Schädigung auftreten kann. Von besonderer Bedeutung ist dies wiederum bei einer Peltier-Wärmepumpe, deren funktionell wesentliche Peltier-Elemente eines besonderen Schutzes vor unzuträglich hoher Temperatur bedürfen. Nachdem dann der Prozessluftstrom erzeugt wird und die Wärmepumpe beaufschlagt, kann eine Abkühlung dieser erreicht werden, und der Prozessluftstrom wird bevorzugt solange erzeugt und aufrechterhalten, bis eine Abkühlung auf den zweiten Temperatur-Schwellwert und/oder bis zum Erreichen einer zweiten vorgebbaren Zeitdauer erfolgt ist. Nach dem Abkühlen kann dann erneut der Prozessluftstrom abgeschaltet werden und nachfolgend gegebenenfalls wieder eingeschaltet werden. Das Takten des Prozessluftstroms kann solange fortgesetzt werden, bis die Prozessluft einen vorgebbaren Temperatur-Sollwert erreicht hat. Dies ermöglicht ein relativ schnelles Aufheizen des Hausgeräts zu Beginn des Trocknungsprozesses und gewährleistet über den gesamten Trocknungsprozess eine optimale Betriebsweise und somit ein optimales Energiemanagement.

Bevorzugt wird der Prozessluftstrom kontinuierlich erzeugt, nachdem die Prozessluft den Temperatur-Sollwert erreicht hat. Es kann jedoch auch vorgesehen sein, dass auch nach dem die Prozessluft diesen Temperatur-Sollwert erreicht hat, weiterhin ein von vorgebbaren Kriterien abhängiges getaktetes Erzeugen des Prozessluftstroms durchgeführt wird. Insbesondere zur Energieverbrauchsoptimierung bei bestimmten Betriebszuständen kann in Abhängigkeit von der Lufttemperatur und der Temperatur der Peltier-Elemente auch dann ein getaktetes Erzeugen des Prozessluftstroms erfolgen.

Bevorzugt umfasst das Hausgerät ein Prozessluft-Gebläse, welches zum getakteten Erzeugen des Prozessluftstroms ein- und ausgeschaltet wird. Durch die Verkürzung der Aufheizzeit des Hausgeräts wird auch eine Verkürzung der gesamten Trocknungszeit erreicht. Da das Hausgerät während des Betriebes einen weitestgehend gleich bleibenden Energieverbrauch aufweist, wird durch eine Programmzeit-Verkürzung auch eine Energieeinsparung erreicht.

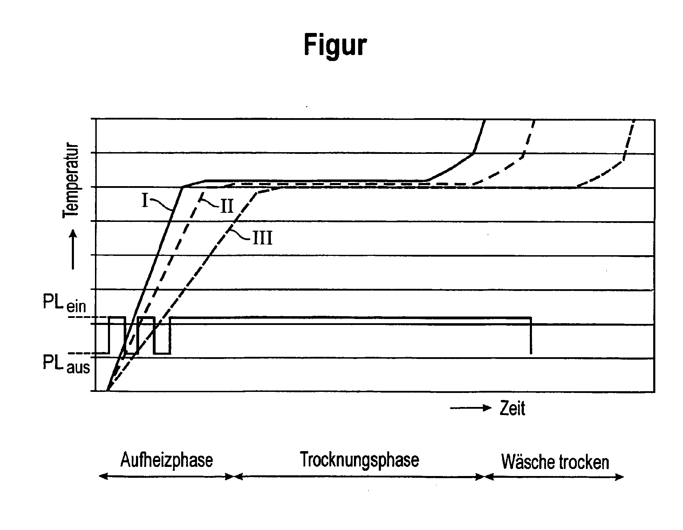

Ein Ausführungsbeispiel der Erfindung wird nachfolgend anhand einer schematischen Zeichnung näher erläutert. Die einzige Figur zeigt ein schematisches Prinzipdiagramm, in der der Temperaturverlauf der Peltier-Elemente der Peltier-Wärmepumpe in Abhängigkeit der Zeit dargestellt ist.

In dem Diagramm sind auf der Zeitachse die drei wesentlichen Prozessphasen eines Trocknungsprozesses dargestellt. Diese umfassen zu Beginn des Trocknungsprozesses die Aufheizphase, auf welche die Trocknungsphase folgt. Im Anschluss an die Trocknungsphase folgt die Endphase.

In dem Diagramm sind drei Temperaturverläufe I, II und III dargestellt. Der Kurvenverlauf I zeigt die Temperaturentwicklung in einem als Kondensations-Wäschetrockner ausgebildeten Hausgerät. Der Kurvenverlauf II zeigt die Temperaturentwicklung während eines Trocknungsprozesses in einem Wäschetrockner, welcher eine Peltier-Wärmepumpe aufweist und dessen Prozessluftstrom zumindest während der Aufheizphase getaktet erzeugt wird. Der Kurvenverlauf III kennzeichnet die Temperaturentwicklung in einem Wäschetrockner mit einer Peltier-Wärmepumpe, bei dem keine Regelung des Prozessluftstroms und somit auch kein Takten des Prozessluftstroms durchgeführt wird.

Gemäß der Darstellung in der Figur ist zu erkennen, dass während der Aufheizphase der Prozessluftstrom getaktet wird. Zu Beginn des Trocknungsprozesses wird ein Prozessluft-. Gebläse des Hausgeräts nicht aktiviert, so dass auch kein Prozessluftstrom erzeugt wird, was durch das Niveau PLₐᵤₛ gekennzeichnet ist. Nach einer vorgebbaren Zeitdauer nach dem Beginn der Aufheizphase wird dann das Prozessluft-Gebläse aktiviert und ein Prozessluftstrom erzeugt. Dies ist dann durch das in dem Diagramm gezeichnete Niveau PLₑᵢₙ dargestellt. Das Einschalten des Prozessluft-Gebläses und somit das Erzeugen eines strömenden Prozessluftstroms erfolgt nach Ablauf einer ersten Zeitdauer und/oder nach dem Erreichen eines ersten Temperatur-Schwellwerts der Peltier-Elemente der Peltier-Wärmepumpe des Hausgeräts. Das Prozessluft-Gebläse bleibt solang aktiviert, bis die Temperatur der Peltier-Elemente auf einen zweiten Temperatur-Schwellwert abgesenkt ist und/oder eine zweite vorgebbare Zeitdauer abgelaufen ist. Dann wird, wie aus der Darstellung in der Figur zu erkennen ist, das Prozessluft-Gebläse wieder deaktiviert und kein strömender Prozessluftstrom erzeugt. Das Takten des Prozessluftstroms wird während der Aufheizphase dann zeitlich nachfolgend nochmals mehrmals durchgeführt. Nachdem die Prozessluft einen vorgebbaren Temperatur-Sollwert erreicht hat, wird das getaktete Erzeugen der Prozessluft bzw. des Prozessluftstroms nicht mehr durchgeführt. Im Ausführungsbeispiel wird dann der Prozessluftstrom während der gesamten Trocknungsphase sowie der restlichen Aufheizphase und zumindest einer bestimmten Zeitdauer der Endphase kontinuierlich erzeugt.

## Patentansprüche

1. Verfahren zum Betreiben eines Hausgeräts zur Pflege von Wäschestücken, bei welchem zum Trocknen der Wäschestücke eine Wärmepumpe des Hausgeräts aktiviert und elektrisch mit Energie versorgt wird, und ein zur Wärmepumpe strömender Prozessluftstrom während eines Trocknungsprozesses erzeugt wird, **dadurch gekennzeichnet, dass** der Prozessluftstrom während einer ersten Prozessphase des Trocknungsprozesses getaktet erzeugt wird, wobei zu Beginn der Aufheizphase die Taktung so durchgeführt wird, dass für eine vorgebbare erste Zeitdauer und/oder bis zum Erreichen eines vorgebbaren ersten Temperatur-Schwellwerts der Wärmepumpe kein Prozessluftstrom erzeugt wird.

2. Verfahren nach Anspruch 1, **dadurch gekennzeichnet, dass** die getaktete Erzeugung des Prozessluftstroms während einer Aufheizphase zu Beginn des Trocknungsprozesses durchgeführt wird.

3. Verfahren nach Anspruch 2, **dadurch gekennzeichnet, dass** nach Ablauf der vorgebbaren ersten Zeitdauer und/oder nach dem Erreichen des ersten Temperatur-Schwellwerts ein Prozessluftstrom für eine vorgebbare zweite Zeitdauer und/oder bis zum Erreichen eines vorgebbaren zweiten Temperatur-Schwellwerts erzeugt wird.

4. Verfahren nach einem der vorigen Ansprüche, **dadurch gekennzeichnet, dass** das getaktete Erzeugen des Prozessluftstroms solange durchgeführt wird, bis die Prozessluft einen vorgebbaren Temperatur-Sollwert erreicht hat.

5. Verfahren nach Anspruch 4, **dadurch gekennzeichnet, dass** der Prozessluftstrom kontinuierlich erzeugt wird, nach dem die Prozessluft den Temperatur-Sollwert erreicht hat.

6. Verfahren nach Anspruch 4, **dadurch gekennzeichnet, dass** der Prozessluftstrom abhängig von der Prozesslufttemperatur und/oder der Temperatur der Peltier-Elemente getaktet erzeugt wird, nach dem die Prozessluft den Temperatur-Sollwert erreicht hat.

7. Verfahren nach einem der vorigen Ansprüche, **dadurch gekennzeichnet, dass** zum getakteten Erzeugen des Prozessluftstroms ein Prozessluft-Gebläse ein- und ausgeschaltet wird.

8. Verfahren nach einem der vorigen Ansprüche, **dadurch gekennzeichnet, dass** die Energieversorgung der Wärmepumpe während des Trocknungsprozesses abhängig von einer erreichten Prozessphase variiert wird.

## Claims

1. Method of operating a domestic appliance for care of items of laundry, in which a heat pump of the domestic appliance is activated for drying the laundry items and is electrically supplied with energy, and a process air flow flowing to the heat pump is produced during a drying process, **characterised in that** the process air flow is produced cyclically during a first process phase of the drying process, wherein at the beginning of the heating-up phase the cycling is performed in such a manner that no process air flow is produced for a predeterminable first time period and/or up to attainment of a predeterminable first temperature threshold value of the heat pump.

2. Method according to claim 1, **characterised in that** the cyclic production of the process air flow is carried out during a heating-up phase to the beginning of the drying process.

3. Method according to claim 2, **characterised in that** after expiry of the predeterminable first time period and/or after attainment of the first temperature threshold value a process air flow is produced for a predeterminable second time period and/or until attainment of a predeterminable second temperature threshold value.

4. Method according to any one of the preceding claims, **characterised in that** the cyclic production of the process air flow is carried out until the process air has reached a predetermined temperature target value.

5. Method according to claim 4, **characterised in that** the process air flow is produced continuously after the process air has reached the temperature target value.

6. Method according to claim 4, **characterised in that** the process air flow is cyclically produced in dependence on the process air temperature and/or the temperature of the Peltier elements after the process air has reached the temperature target value.

7. Method according to any one of the preceding claims, **characterised in that** a process air fan is switched on and off for the cyclic production of the process air flow.

8. Method according to any one of the preceding claims, **characterised in that** the energy supply of the heat pump is varied during the drying process in dependence on an attained process phase.

## Revendications

1. Procédé d'exploitation d'un appareil électroménager pour l'entretien du linge, dans lequel une pompe à chaleur de l'appareil électroménager est activée et alimentée électriquement en énergie pour le séchage du linge, et un flux d'air de processus s'écoulant vers la pompe à chaleur est créé durant un processus de séchage, **caractérisé en ce que** le flux d'air de processus est créé de façon cadencée durant une première phase de processus du processus de séchage, dans lequel le cadencement est exécuté au début de la phase de chauffage de telle sorte qu'aucun flux d'air de processus n'est créé durant une première durée prédéterminable et/ou jusqu'à l'atteinte d'une première valeur limite de température prédéterminable de la pompe à chaleur.

2. Procédé selon la revendication 1, **caractérisé en ce que** la création cadencée du flux d'air de processus durant une phase de chauffage est exécutée au début du processus de séchage.

3. Procédé selon la revendication 2, **caractérisé en ce que**, après écoulement de la première durée prédéterminable et/ou après l'atteinte de la première valeur limite de température, un flux d'air de processus est créé durant une deuxième durée prédéterminable et/ou jusqu'à l'atteinte d'une deuxième valeur limite de température prédéterminable.

4. Procédé selon l'une des revendications précédentes, **caractérisé en ce que** la création cadencée du flux d'air de processus est exécutée jusqu'à ce que l'air de processus ait atteint une valeur de consigne de température prédéterminable.

5. Procédé selon la revendication 4, **caractérisé en ce que** le flux d'air de processus est créé en continu, après que l'air de processus a atteint la valeur de consigne de température.

6. Procédé selon la revendication 4, **caractérisé en ce que** le flux d'air de processus est créé de façon cadencée en fonction de la température de l'air de processus et/ou de la température des éléments Peltier, après que l'air de processus a atteint la valeur de consigne de température.

7. Procédé selon l'une des revendications précédentes, **caractérisé en ce que**, pour la création cadencée du flux d'air de processus, une soufflerie à air de processus est mise en et hors service.

8. Procédé selon l'une des revendications précédentes, **caractérisé en ce que** l'alimentation en énergie de la pompe à chaleur durant le processus de séchage est modifiée en fonction de l'atteinte d'une phase de processus.
